# EUROPÄISCHE PATENTSCHRIFT

(11) **EP 2 081 241 B1**
(45) Veröffentlichungstag und Bekanntmachung des Hinweises auf die Patenterteilung: **25.04.2012**
(21) Anmeldenummer: 08170923.0
(22) Anmeldetag: 08.12.2008
(51) Int. Cl.: H01M 2/06, H01M 2/30, H01M 2/32, H01M 2/34

(54) **Durchführung für eine Batterie, Verfahren zur Herstellung derselben und Batterie**
Feedthrough for battery, method for manufacturing the same and battery
Traversée pour une batterie, procédé pour fabriquer une telle traversée et batterie

(30) Priorität: 15.01.2008 DE 102008004308
(43) Veröffentlichungstag der Anmeldung: 22.07.2009
(73) Patentinhaber: Biotronik CRM Patent AG, 6341 Baar (CH)
(72) Erfinder: Traulsen, Tim, 01796 Pirna (DE); Müller, Jens-Peter, 01309 Dresden (DE)
(74) Vertreter: Lindner-Vogt, Karin L.

(56) Entgegenhaltungen:
- DE-C1- 19 544 198
- JP-A- 2001 266 813
- JP-A- 2008 140 705
- US-A- 4 598 466
- US-A1- 2004 007 748
- US-A1- 2007 172 735

## Beschreibung

Die vorliegende Erfindung betrifft eine Durchführung für eine Batterie, welche einerstes Anschlusselement und ein zweites Anschlusselement, welche auf unterschiedlichem elektrischen Potential liegen, und welche eine einen Kurzschluss verhindernde Beschichtung aufweist, die auf dem ersten Anschlusselement und dem zweiten Anschlusselement liegt. Ferner betrifft die vorliegende Erfindung ein Verfahren zur Herstellung einer derartigen Durchführung sowie eine Batterie mit mindestens einer derartigen Durchführung.

In hermetisch verschlossenen Batterien, wie sie z. B. in medizinischen Implantaten verwendet werden, kommen Glas-Metall-Durchführungen oder keramische Durchführungen zum Einsatz, die eine gasdichte, elektrisch isolierte Durchführung eines Batterie-Pols durch das metallische Gehäuse sicherstellen. Eine derartige Durchführung weist ein erstes Anschlusselement in Form eines Pins und ein zweites Anschlusselement in Form eines Flanschelements auf, welche auf unterschiedlichem elektrischem Potential (Pluspol, Minuspol) liegen. Aufgrund des geringen Abstands zwischen dem metallischen Pin und dem metallischen Flanschelement reichen bereits geringe Mengen an elektrisch leitfähigem Material im Innenbereich der Durchführung aus, um einen Kurzschluss der Batterie zu erzeugen.

Derartige, einen Kurzschluss erzeugende leitfähige Materialien, können dadurch entstehen, dass sich die Elektrodenmaterialien innerhalb der Batterie aufgrund der vorliegenden Potentialdifferenzen im Elektrolyten auflösen. Im Fall von Lithium-Batterien kann unter bestimmten Bedingungen beispielsweise Lithium in Form von Lithium-Kationen in Lösung gehen. Diese Lithium-Kationen können sich auf Batteriebauteilen mit anodischem Potential in Form von elementarem Lithium abscheiden. Bei bekannten Batterien werden, um zu vermeiden, dass durch eine derartige Abscheidung Kurzschlüsse innerhalb der Batterien hervorgerufen werden, kritische Bauteile innerhalb der Batterie isoliert. Z.B. verhindert eine elektrisch isolierende Schicht die Übertragung von Elektronen auf die Ionen des Elektrolyten. Eine Abscheidung wird somit verhindert. Ferner wird eine Metallabscheidung durch die Unterbindung der Benetzung des Elektrolyten von elektrisch leitfähigen Bauteilen verhindert.

Bei herkömmlichen Batterien werden Glas-Metall-Durchführungen oder keramische Durchführungen, um die oben angegebenen Probleme zu vermeiden, an der Innenseite der Batterie verschlossen. Der Verschluss erfolgt in der Regel durch Vergießen mit einem Polymerharz oder durch einen Polymer-Stopfen, der auf den Pin der Durchführung aufgeschoben wird. Diese Vorgehensweise lässt sich allerdings bei sehr kleinen Durchführungen nur schwierig realisieren. Außerdem sind bei geringem Abstand zwischen Flanschelement und Pin lediglich Vergussmaterialien mit sehr geringer Viskosität geeignet, so dass die Auswahl an Vergussmaterialien begrenzt ist. Die Auswahl wird zusätzlich dadurch begrenzt, da diese Materialien keine elektrolytlöslichen Bestandteile enthalten dürfen, um zu verhindern, dass der Elektrolyt das Vergussmaterial beschädigt. Die technische Realisierung des Vergießens ist außerdem dadurch erschwert, dass der Verguss poren- und lunkerfrei erfolgen muss. Bei der Verwendung von Polymer-Stopfen besteht das Problem, dass diese sich meist nur schwer vollständig gegenüber Pin und Flanschelement abdichten lassen.

Eine Verbesserung brachten Beschichtungen auf der der Batterie zugewandten Seite der Durchführung. Diese lassen sich leicht aufbringen und bieten gewissen Schutz. Solche Durchführungen sind beispielsweise aus den Dokumenten US 4,598,466, US 2007/0172735 sowie der Patentanmeldung JP 2001/266813 zu entnehmen. Alle dort beschriebenen Lösungen beschichten jedoch nur partiell die beiden Pole und die Kriechstrecke zwischen den beiden Polen, so dass es durch beispielsweise die oben genannten Abscheidung von elementarem Lithium weiter zu Kurzschlüssen kommen kann.

Die Aufgabe der vorliegenden Erfindung besteht somit darin, eine solche beschichtete Durchführung weiterzubilden und beispielsweise durch Abdichtung weiter zu verbessern, welche einen elektrischen Kurzschluss zwischen Pin und Flanschelement effektiver, vor allem über eine lange Lebensdauer der Batterie, vermeidet. Es ist außerdem die Aufgabe, eine entsprechende Batterie zu schaffen. Die Aufgabe besteht zusätzlich darin, ein Verfahren zur Herstellung einer derartigen Durchführung anzugeben, das einfach und kostengünstig ist.

Die oben angegebene Aufgabe wird durch eine Durchführung gelöst, welche ein erstes Anschlusselement und ein zweites Anschlusselement, welche auf verschiedenem elektrischen Potential liegen, und auf dem ersten Anschlusselement und dem zweiten Anschlusselement einen Kurzschluss zwischen dem erstem Anschlusselement und dem zweitem Anschlusselement verhindernde Beschichtung aufweist, die mittels chemischer Gasphasenabscheidung (CVD) hergestellt ist. Die Durchführung zeichnet sich dadurch aus, dass das erste Anschlusselement als Pin und das zweite Anschlusselement als Flanschelement ausgebildet ist und die Beschichtung auf einem Bereich der Mantelfläche des Pins, der aus dem Flanschelement batterieseitig herausragt, der batterieseitigen Stirnfläche des Flanschelements sowie der batterieseitigen Stirnfläche der zwischen Pin und Flanschelement angeordneten Glas-Einschmelzung angeordnet ist.

Unter dem Begriff "chemische Gasphasenabscheidung" (Englisch: chemical vapor deposition, CVD) wird ein Verfahren verstanden, bei dem an der erhitzten Oberfläche eines Substrats aufgrund einer chemischen Reaktion aus der Gasphase eine Feststoffkomponente abgeschieden wird. Hierfür müssen flüchtige Verbindungen der Schichtkomponenten existieren, die bei einer bestimmten Reaktionstemperatur die feste Schicht abscheiden. Das Verfahren der chemischen Gasphasenabscheidung zeichnet sich durch mindestens eine Reaktion an der Oberfläche des zu beschichtenden Werkstücks aus. An dieser Reaktion müssen mindestens zwei gasförmige Ausgangsverbindungen (Edukte) und mindestens zwei Reaktionsprodukte - davon mindestens eines gasförmig und mindestens eines in der festen Phase - beteiligt sein. Die chemische Gasphasenabscheidung ermöglicht eine porenfreie Beschichtung von komplexen, dreidimensional geformten Oberflächen. Hierdurch können beispielsweise feinste Vertiefungen oder auch Hohlkörper auf ihrer Innenseite gleichmäßig beschichtet werden, so dass ein Kurzschluss zwischen erstem Anschlusselement und zweitem Anschlusselement effektiv verhindert wird. Aufgrund der Porenfreiheit der Beschichtung wirkt diese sowohl als elektrische als auch als mechanische Grenzschicht zwischen den metallischen Bauteilen und dem Elektrolyten. Da die Beschichtung bei Raumtemperatur im Vakuum stattfindet, wird die Durchführung beim Beschichten keiner Temperaturbelastung ausgesetzt, so dass die Einglasung oder die Keramik nicht beschädigt wird. Ein weiterer Vorteil der Aufbringung einer isolierenden Beschichtung mittels CVD besteht darin, dass Teile der Bauteile der Durchführung, die nicht beschichtet werden sollen, abdeckt werden können. Vorliegend trifft dies beispielsweise auf die Mantelfläche des zweiten Anschlusselements in Form eines Flanschelements zu, da der Flansch bei der Verwendung der Durchführung in einer Batterie an der Mantelfläche verschweißt wird und deshalb keine Beschichtung aufweisen darf.

Besonders bevorzugt wird eine konforme, d.h. homogene CVD-Schichtabscheidung angewendet, welche eine geschlossene Schicht erzeugt.

In einem Ausführungsbeispiel enthält eine so hergestellte Beschichtung die Verbindung Parylene, vorzugsweise besteht die Beschichtung vollständig aus Parylene. Eine derartige Beschichtung weist sehr gute Hafteigenschaften auf. Dies trifft insbesondere auf typische Materialien, die in einer Durchführung verwendet werden (als erstes Anschlusselement-Material beispielsweise Edelstahl oder Molybdän und als zweites Anschlusselement-Material beispielsweise Edelstahl oder Titan), zu. Ferner ist Parylene chemisch inert gegenüber den Bestandteilen typischer Batterie-Elektrolyte, so dass sich die Beschichtung weder auflöst noch aufquillt. Dadurch wird sichergestellt, dass keine Bestandteile der Beschichtung in die Elektrolyten gelangen. Die Parylene-Beschichtung weist zudem eine hohe Temperaturbeständigkeit auf.
Das bei der chemischen Gasphasenabscheidung vorzugsweise verwendete Parylene zeichnet sich außerdem dadurch aus, dass Parylene eine hydrophobe, chemisch resistente Beschichtung mit einer hervorragenden Barrierewirkung gegenüber anorganischen und organischen Medien, starken Säuren, Laugen, Gasen und Wasserdampf bildet. Außerdem erzeugt Parylene eine hervorragende elektrische Isolationsschicht mit einer hohen Spannungsfestigkeit und einer niedrigen Dielektrizitätskonstante. Zudem ist die Beschichtung biostabil und biokompatibel und bei der FDA zugelassen. Ab einer Schichtdicke von etwa 0,2 µm kann die Paryleneschicht mittels der chemischen Gasphasenabscheidung mikroporen- und pinhohlfrei hergestellt werden. Mittels CVD lässt sich eine dünne und transparente Parylene-Beschichtung mit hoher Spaltgängigkeit herstellen, die für komplex gestaltete Substrate oder Kanten geeignet ist. Mittels CVD kann die Beschichtung ohne Temperaturbelastung der Substrate hergestellt werden, sie erfolgt bei Raumtemperatur im Vakuum. Die Parylene-Beschichtung bildet zudem einen Korrosionsschutz. Mittels CVD lässt sich außerdem eine absolut gleichförmige Schicht ausbilden. Die Beschichtung ist temperaturbeständig bis zu 200°C und mechanisch stabil im Bereich von etwa -200°C bis etwa +150°C. Die Parylene-Beschichtung verursacht niedrige mechanische Spannungen, ist abriebfest, gast nicht aus und weist eine hohe elektrische Durchschlagfestigkeit auf.

In einer bevorzugten Ausführung beträgt die Dicke der Beschichtung etwa 1 µm bis etwa 100 µm, besonders bevorzugt zwischen etwa 3 µm bis etwa 40 µm. Diese Dicke hat den Vorteil, dass eine geschlossene porenfreie Schicht ausgebildet wird, aber noch keine Rissbildung durch Spannungen innerhalb der Beschichtung auftreten.

In einem unten dargestellten Ausführungsbeispiel ist die Beschichtung auf einem Bereich der Mantelfläche des ersten Anschlusselements in Form eines Pins, der aus dem zweiten Anschlusselement in Form eines Flanschelements batterieseitig herausragt, der batterieseitigen Stirnfläche des zweiten Anschlusselements sowie der batterieseitigen Stirnfläche der zwischen erstem Anschlusselement und zweitem Anschlusselement angeordneten Glas-Einschmelzung angeordnet. Die Beschichtung bedeckt dabei den jeweiligen Abschnitt der Mantelfläche des Pins sowie die jeweiligen die Stirnflächen von Glas-Einschmelzung und Flanschelement vollständig, so dass eine zusammenhängende Beschichtungsfläche vorliegt, die sich über diese drei Elemente der Durchführung erstreckt. Der beschichtete Bereich der Mantelfläche des Pins schließt sich batterieseitig direkt an die Glaseinschmelzung an. Durch diese bevorzugte Anordnung der Beschichtung wird auf einfache Weise eine besonders effektive Abdichtung von erstem Anschlusselement und zweitem Anschlusselement gegen den Elektrolyten sowie eine elektrische Isolierung von erstem Anschlusselement und zweitem Anschlusselement erzielt.

In einem weiteren Ausführungsbeispiel ist auf der Oberfläche der Beschichtung mindestens teilweise einen Silikon-Verguss angeordnet. Dieser Verguss übernimmt eine zusätzliche Abdichtungsfunktion.

Die obige Aufgabe wird außerdem gelöst durch eine Batterie mit mindestens einer oben angegebenen, erfindungsgemäßen Durchführung. Eine derartige Batterie hat den Vorteil, dass sie sehr langlebig ist und Kurzschlüsse der stromführenden Komponenten effektiv verhindert werden.

Die obige Aufgabenstellung wird ferner gelöst durch ein Verfahren zur Herstellung einer Durchführung bei dem zunächst die Durchführung mit erstem Anschlusselement und einem mit dem erstem Anschlusselement mechanisch verbundenen zweiten Anschlusselement bereitgestellt und anschließend eine einen Kurzschluss zwischen zweitem Anschlusselement und erstem Anschlusselement verhindernde Beschichtung, welche vorzugsweise Parylene enthält, mittels chemischer Gasphasenabscheidung (CVD) auf dem ersten und/oder zweiten Anschlusselement aufgebracht wird. Die Aufbringung der Beschichtung mittels CVD hat die oben erläuterten Vorteile.

Weiterhin bevorzugt ist die Anwendung einer Plasma-unterstützten chemischen Gasphasenabscheidung (Englisch: plasma enhanced chemical vapor deposition, PECVD). Durch die PECVD kann die Temperaturbelastung des Substrats reduziert werden, da oberhalb des Substrats ein Hochfrequenz-Plasma gezündet wird, durch das die eingeleiteten Gase angeregt werden. Hierdurch ist eine Reduzierung der Reaktionsenergie und somit eine niedrigere Prozesstemperatur möglich. Eine Beschichtung kann daher bei Raumtemperatur erfolgen.

Die Erzeugung des Plasmas erfolgt im Zusammenhang mit der vorliegenden Erfindung vorzugsweise kapazitiv durch elektromagnetische Felder oder durch Mikrowellenstrahlung. Zur Herstellung eines kapazitiv erzeugten Plasmas wird in der Regel ein ausreichend starkes elektrisches Wechselfeld an zwei Platten angelegt, zwischen denen sich das Plasma ausbildet. In dem Plasma oszillieren geladene Teilchen mit der Frequenz des Wechselfeldes hin und her. Bei einer Anregung des Plasmas durch Mikrowellenstrahlung wird diese durch ein Magnetron in den Reaktionsraum geleitet. Zum Zünden des Plasmas muss die Feldstärke der elektromagnetischen Welle zunächst hoch genug sein, um einen elektrischen Durchbruch und Stoßionisation hervorzurufen. Nach der Zündung des Plasmas passt sich der Magnetron an die dann geänderten Feldstärken- und Impedanzverhältnisse an. Weitere Möglichkeiten, das Plasma zu erzeugen, bestehen in der thermischen Anregung mittels chemischer Reaktionen, der Strahlungsanregung mittels Laserstrahlung, der Anregung durch Gleichspannung und der Anregung durch elektromagnetische Felder mittels einer induktiv (magnetisch) arbeitenden Vorrichtung.

Besonders bevorzugt erfolgt die chemische Gasphasenabscheidung bei einem Druck von etwa 0,5 hPa bis etwa 0,01 hPa, vorzugsweise bei etwa 0,1 hPa.

In einem besonders bevorzugten Ausführungsbeispiel kann nach der CVD- oder PECVD-Beschichtung eine Plasma-Nachbehandlung der aufgebrachten Schicht durchgeführt werden, welche zur Aktivierung der Oberfläche der Beschichtung führt. Diese aktivierte Oberfläche stellt die Grundlage für zusätzliche Sicherungsmaßnahmen der Durchführung dar. Beispielsweise kann eine derartig beschichtete Durchführung anschließend mit Silikonharz vergossen werden. Auf diese Weise können mehrere Schutzmaßnahmen parallel angewendet werden, so dass die Sicherheit der Batterien, insbesondere bei sensiblen Anwendungen wie in der Medizintechnik, zusätzlich erhöht wird.

In einem weiteren bevorzugten Ausführungsbeispiel werden die Bauteile, insbesondere das erste Anschlusselement und/oder das zweite Anschlusselement vor der Beschichtung einer Plasma-Ultra-Feinreinigung unterzogen. Hierbei werden in einem Plasma unter Anwesenheit von Sauerstoff alle organischen Verunreinigungen auf der Oberfläche der Durchführung oxidativ entfernt. Auf diese Weise hochgereinigte Oberflächen bewirken eine optimale Haftung der Beschichtung auf dem Substrat. Eine derartige Reinigung stabilisiert die Reproduzierbarkeit des Beschichtungsprozesses.

In einem weiteren Ausführungsbeispiel wird nach der Plasma-Nachbehandlung oder nach dem Beschichtungsprozess die Beschichtung mittels eines Silikonharzes vergossen.

Weitere Ziele, Merkmale, Vorteile und Anwendungsmöglichkeiten der Erfindung ergeben sich aus der nachfolgenden Beschreibung eines Ausführungsbeispiels anhand der Figuren. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den einzelnen Ansprüchen oder deren Rückbeziehung.

Es zeigen schematisch:
- Fig. 1: eine perspektivische Ansicht eines ersten Ausführungsbeispiels einer erfin- dungsgemäßen Durchführung von der Seite und
- Fig. 2: das batterieseitige Ende eines Querschnitts der erfindungsgemäßen Durch- führung gemäß Fig. 1,
- Fig. 3: eine perspektivische Ansicht eines zweiten Ausführungsbeispiels einer erfin- dungsgemäßen Durchführung von der Seite und
- Fig. 4: das batterieseitige Ende eines Querschnitts der erfindungsgemäßen Durch- führung gemäß Fig. 3.

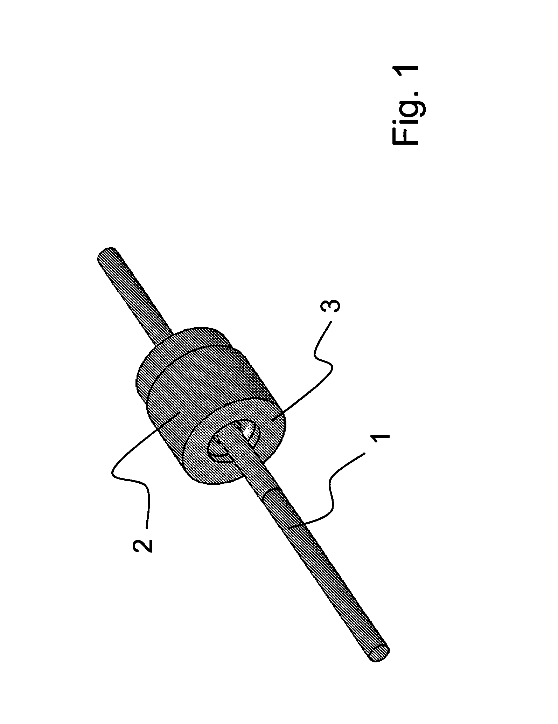

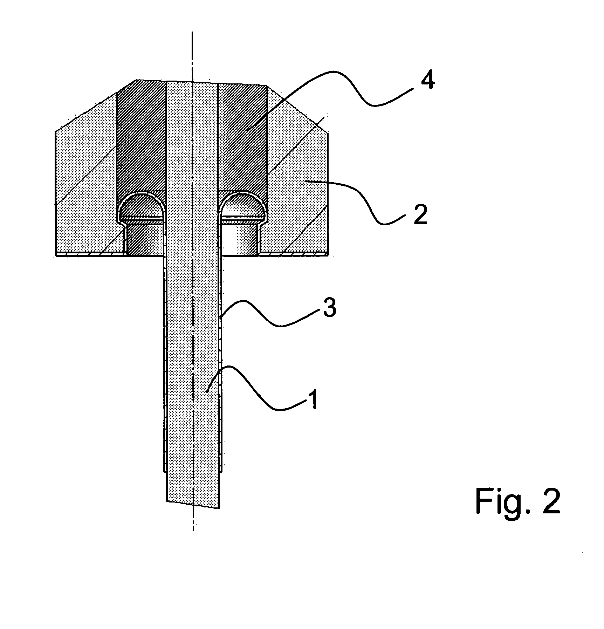

Die in den Figuren 1 und 2 dargestellte Glas-Metall-Durchführung weist einen zylinderförmigen Pin 1 als erstes Anschlusselement und ein den Pin 1 umgebendes, hohlzylinderförmiges Flanschelement 2 als zweitens Anschlusselement auf. Der Pin 1 ist konzentrisch in der mittigen Öffnung des Flanschelements 2 angeordnet, wobei zwischen Pin 1 und Flanschelement 2 eine Glas-Einschmelzung 4 vorgesehen ist. Die Glas-Einschmelzung 4 ist derart in der Öffnung des Flanschelements 2 angeordnet, dass sie von der batterieseitigen Stirnfläche des Flanschelements 2 etwas zurückversetzt ist. Die batterieseitige Stirnfläche des Flanschelements 2 und die batterieseitige Stirnfläche der Glas-Einschmelzung 4 sowie ein Bereich der Mantelfläche des Pins 1, der aus der Glas-Einschmelzung 4 batterieseitig hervorsteht, sind mit einer CVD-Beschichtung 3 versehen, die aus Parylene besteht. Der Pin 1 stellt bei der Durchführung den Pluspol und das Flanschelement 2 den Minuspol dar.

Die Parylene-Beschichtung wird mittels einer chemischen Gasphasenabscheidung erzeugt. Ausgangsmaterial ist Di-Para-Xylylen oder deren halogenierte Substituenten, die bei Raumtemperatur stabile Verbindungen ausbilden. Das Ausgangsmaterial wird verdampft und durch eine Hochtemperaturzone geleitet. Hierbei bildet sich ein hochreaktives Monomer, ein sogenanntes Para-Xylylen-Diradikal, das auf der zu beschichtenden Oberfläche der Durchführung sofort zu einem kettenförmigen Polymer reagiert.

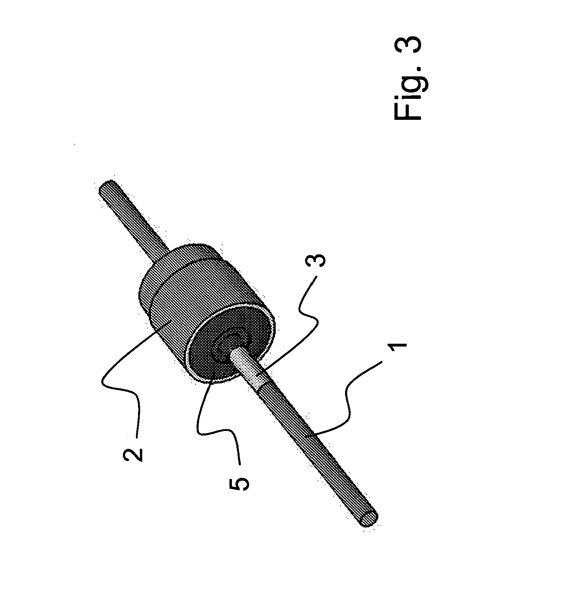

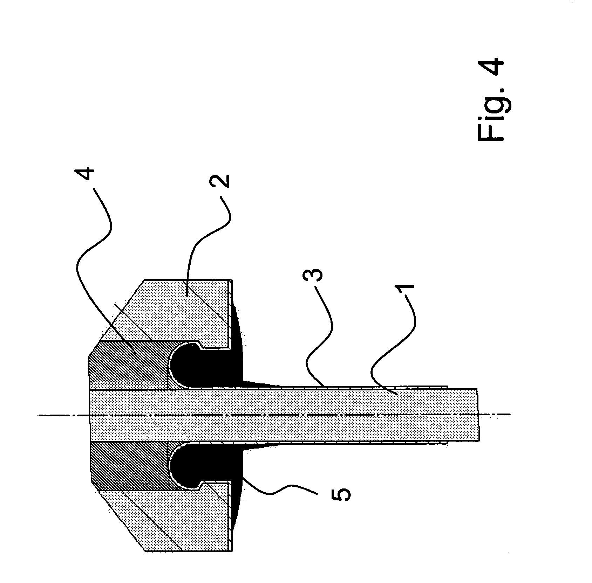

In den Figuren 3 und 4 ist ein weiteres Ausführungsbeispiel der vorliegenden Erfindung dargestellt, bei dem ein Teil der batterieseitigen Stirnfläche des Flanschelements 2 und die batterieseitige Stirnfläche der Glas-Einschmelzung 4 sowie ein Bereich der Mantelfläche des Pins 1, der aus der Glas-Einschmelzung 4 batterieseitig hervorsteht, mit einem Silikon-Verguss 5 versehen sind. Hierbei ist der Verguss 5 auf die Beschichtung 3 aufgebracht und erstreckt sich nur über einen Teil der Oberfläche von Pin 1, Flanschelement 2 und Glas-Einschmelzung 4, die mit der Parylene-Beschichtung 3 versehen sind. Der Silikon-Verguss 5 besteht aus einem Silikonharz.

### Bezugszeichenliste

- 1: Pin
- 2: Flanschelement, Flansch
- 3: Beschichtung aus Parylene
- 4: Glas-Einschmelzung
- 5: Silikon-Verguss

## Patentansprüche

1. Durchführung für eine Batterie, wobei die Durchführung ein erstes Anschlusselement (1) und ein zweites Anschlusselement (2), welche auf verschiedenem elektrischen Potential liegen, aufweist und wobei das erste Anschlusselement und das zweite Anschlusselement eine isolierende Beschichtung (3) zur Verhinderung eines Kurzschlusses zwischen den Anschlusselementen (1,2) aufweist, die mittels chemischer Gasphasenabscheidung (CVD) hergestellt ist, **dadurch gekennzeichnet, dass** das erste Anschlusselement als Pin (1) und das zweite Anschlusselement als Flanschelement (2) ausgebildet ist, wobei die Beschichtung (3) auf einem Bereich der Mantelfläche des Pins (1), der aus dem Flanschelement (2) batterieseitig herausragt, der batterieseitigen Stirnfläche des Flanschelements (2) sowie der batterieseitigen Stirnfläche der zwischen Pin (1) und Flanschelement (2) angeordneten Glas-Einschmelzung (4) angeordnet ist.

2. Durchführung nach Anspruch 1, **dadurch gekennzeichnet, dass** die Beschichtung (3) aus dem Ausgangsmaterial Di-Para-Xylylen oder dessen halogenierten Substituenten hergestellt ist.

3. Durchführung nach Anspruch 1 oder 2, **dadurch gekennzeichnet, dass** die Dicke der Beschichtung (3) zwischen 1 µm bis 100 µm, bevorzugt zwischen 3 µm und 40 µm beträgt.

4. Durchführung nach einem der vorhergehenden Ansprüche, **dadurch gekennzeichnet, dass** auf der Oberfläche der Beschichtung (3) mindestens teilweise ein Silikon-Verguss (5) angeordnet ist.

5. Batterie mit mindestens einer Durchführung nach einem der vorhergehenden Ansprüche.

6. Verfahren zur Herstellung einer Durchführung nach einem der Ansprüche 1 bis 4, **dadurch gekennzeichnet, dass** die Beschichtung (3) nach der Bereitstellung von erstem Anschlusselement (1) und mit diesem mechanisch verbundenen zweiten Anschlusselement (2) auf dem ersten Anschlusselement (1) und/oder dem zweiten Anschlusselement (2) mittels chemischer Gasphasenabscheidung (CVD) erzeugt wird.

7. Verfahren nach Anspruch 6, **dadurch gekennzeichnet, dass** die Beschichtung (3) mittels Plasma-unterstützter, chemischer Gasphasenabscheidung (PECVD) erzeugt wird.

8. Verfahren nach einem der Ansprüche 6 und 7, **dadurch gekennzeichnet, dass** die chemische Gasphasenabscheidung bei 0,5 hPa bis 0,01 hPa, vorzugsweise bei 0,1 hPa durchgeführt wird.

9. Verfahren nach einem der Ansprüche 6 bis 8, **dadurch gekennzeichnet, dass** vor der Beschichtung alle organischen Verunreinigungen auf der Oberfläche der Durchführung in einem Plasma unter Anwesenheit von Sauerstoff oxidativ entfernt werden (Plasma-Ultra-Feinreinigung).

10. Verfahren nach einem der Ansprüche 6 bis 9, **dadurch gekennzeichnet, dass** die Oberfläche der Beschichtung (3) mit einer Plasma-Nachbehandlung aktiviert wird.

11. Verfahren nach Anspruch 10, **dadurch gekennzeichnet, dass** nach der Plasma-Nachbehandlung der Beschichtung (3) oder dem Beschichtungsprozess ein Verguss der Durchführung mittels Silikonharz erfolgt.

## Claims

1. A feedthrough for a battery, wherein the feedthrough comprises a first connection element (1) and a second connection element (2), which are at different electric potential, and wherein the first connection element and the second connection element comprise an insulating coating (3) produced by chemical vapor deposition (CVD) for preventing a short circuit between the connnection elements (1,2), **characterized in that** the first connection element is formed as a pin (1) and the second connection element is formed as a flange element (2), wherein the coating (3) is disposed on a region of the jacket surface of the pin (1) that protrudes from the flange element (2) on the battery side, on the battery-side end face of the flange element (2) and on the battery-side end face of the glass seal (4) disposed between the pin (1) and the flange element (2).

2. The feedthrough according to claim 1, **characterized in that** the coating (3) is made of the starting material di-para-xylylene or the halogenated substituents thereof.

3. The feedthrough according to claim 1 or 2, **characterized in that** the thickness of the coating (3) is between 1 µm to 100 µm, preferably between 3 um and 40 µm.

4. The feedthrough according to any one of the preceding claims, **characterized in that** a silicone sealing compound (5) is disposed on the surface of the coating (3) at least in parts.

5. A battery comprising at least one feedthrough according to any one of the preceding claims.

6. A method for producing a feedthrough according to any one of the claims 1 to 4, **characterized in that** the coating (3) is formed after provision of the first connection element (1) and, mechanically connected thereto, the second connection element (2) on the first connection element (1) and/or the second connection element (2) by chemical vapor deposition (CVD).

7. The method according to claim 6, **characterized in that** the coating (3) is formed by plasma-enhanced chemical vapor deposition (PECVD).

8. The method according to any one of the claims 6 and 7, **characterized in that** the chemical vapor deposition is carried out at 0.5 hPa to 0.01 hPa, preferably at 0.1 hPa.

9. The method according to any one of the claims 6 to 8, **characterized in that**, before coating, all organic contaminants on the surface of the feedthrough are removed in an oxidative manner in a plasma in the presence of oxygen (ultra-fine plasma cleaning).

10. The method according to any one of the claims 6 to 9, **characterized in that** the surface of the coating (3) is activated with plasma aftertreatment.

11. The method according to claim 10, **characterized in that**, after the plasma aftertreatment of the coating (3) or after the coating process, the feedthrough is sealed using silicone resin.

## Revendications

1. Passage pour une batterie, dans lequel le passage comporte un premier élément de raccordement (1) et un deuxième élément de raccordement (2), à des potentiels électriques différents, et dans lequel le premier élément de raccordement et le deuxième élément de raccordement comportent un revêtement isolant (3) pour empêcher un court-circuit entre les éléments de raccordement (1, 2), qui est réalisé au moyen d'un dépôt chimique en phase gazeuse (CVD), **caractérisé en ce que** le premier élément de raccordement est conçu comme une broche (1) et le deuxième élément de raccordement est conçu comme un élément de bride (2), le revêtement (3) étant appliqué sur une région de la surface extérieure de la broche (1) dépassant de l'élément de bride (2) côté batterie, de la surface frontale de l'élément de bride (2) côté batterie et de la surface frontale du scellement en verre (4) disposé entre la broche (1) et l'élément de bride (2), côté batterie.

2. Passage selon la revendication 1, **caractérisé en ce que** le revêtement (3) est constitué de départ diparaxylylène ou de ses substituts halogénés, en tant que matériau de départ.

3. Passage selon la revendication 1 ou 2, **caractérisé en ce que** l'épaisseur du revêtement (3) est comprise entre 1 µm et 100 µm, de préférence entre 3 µm et 40 µm.

4. Passage selon l'une des revendications précédentes, **caractérisé en ce qu'**un scellement (5) constitué de silicone est disposé à la surface du revêtement (3) au moins partiellement.

5. Batterie avec au moins un passage selon l'une des revendications précédentes.

6. Procédé pour la fabrication d'un passage selon l'une des revendications 1 à 4, **caractérisé en ce que** le revêtement (3) est produit sur le premier élément de raccordement (1) et/ou sur le deuxième élément de raccordement (2), au moyen d'un dépôt chimique en phase gazeuse (CVD), après la mise à disposition du premier élément de raccordement (1), et du deuxième élément de raccordement (2) relié à celui-ci mécaniquement.

7. Procédé selon la revendication 6, **caractérisé en ce que** le revêtement (3) est produit au moyen d'un dépôt chimique en phase gazeuse assisté par plasma (PECVD).

8. Procédé selon l'une des revendications 6 et 7, **caractérisé en ce que** le dépôt chimique en phase gazeuse est effectué entre 0,5 hPa et 0,01 hPa, de préférence à 0,1 hPa.

9. Procédé selon l'une des revendications 6 à 8, **caractérisé en ce qu'**avant le revêtement, toutes les impuretés organiques sont éliminées de façon oxydative de la surface du passage, dans un plasma, en présence d'oxygène (nettoyage ultrafin au plasma).

10. Procédé selon l'une des revendications 6 à 9, **caractérisé en ce que** la surface du revêtement (3) est activée avec un traitement ultérieur au plasma.

11. Procédé selon la revendication 10, **caractérisé en ce qu'**après le traitement ultérieur au plasma du revêtement (3) ou après l'opération de revêtement, le passage est scellé à l'aide d'une résine de silicone.
